# EUROPÄISCHE PATENTANMELDUNG

(11) **EP 1 249 337 A2**
(43) Veröffentlichungstag der Anmeldung: **16.10.2002**
(21) Anmeldenummer: 02007926.5
(22) Anmeldetag: 09.04.2002
(51) Int. Cl.: B32B 1/08, F16L 11/127

(54) **Mehrschichtige flexible Leitung**

(30) Priorität: 09.04.2001 DE 10117753
(71) Anmelder: VERITAS AG, 63571 Gelnhausen (DE)
(72) Erfinder: Schulz, Volker, 63607 Wächtersbach (DE); Severengiz, Tevfik, 63571 Gelnhausen (DE); Zuelich, Wilfried, 63571 Gelnhausen (DE)
(74) Vertreter: Grünecker, Kinkeldey, Stockmair & Schwanhäusser Anwaltssozietät

(57) **Zusammenfassung**

Die vorliegende Erfindung bezieht sich auf eine mehrschichtige Leitung mit zumindest einer Stützschicht und mit wenigstens einem elektrisch leitfähigem Abschnitt, der zumindest mittelbar mit der Stützschicht verbunden ist. Um eine derartige mehrschichtige Leitung mit einer längeren Lebensdauer zu versehen bei gleichzeitig ausreichender elektrischen Leitfähigkeit, ist erfindungsgemäß vorgesehen, dass der leitfähige Abschnitt im Wesentlichen streifenförmig ist und sich in Längsrichtung der Leitung erstreckt.

## Beschreibung

Die vorliegende Erfindung bezieht sich auf eine mehrschichtige Leitung, vorzugsweise Kraftstoffleitung für Kraftfahrzeuge mit zumindest einer Stützschicht und mit wenigstens einem elektrisch leitfähigen Abschnitt, der zumindest mittelbar mit der Stützschicht verbunden ist.

Derartige mehrschichtige flexible Leitungen, die elektrostatische Energie abzuleiten in der Lage sind, sind aus dem Stand der Technik bekannt. Sie werden häufig als Kraftstoffleitung in Kraftfahrzeuge eingesetzt. Üblicherweise bildet der elektrisch leitfähige Abschnitt die innerste Schicht der Leitung. Die elektrisch leitfähige Schicht ist mit der Stützschicht, die sowohl Haftschicht, als auch Zwischenschicht, als auch Decke sein kann, fest verbunden. Bei dieser Stützschicht kann es sich z.B. um eine Stützschicht aus Elastomer oder Kunststoffe handeln. Die Leitungen können als Druckträger z.B. mit einer Textileinlage versehen sein. Insgesamt handelt es sich bei derartigen Leitungen um relativ dickwandige Leitungen. Da die Platzverhältnisse im Motorraum sehr beengt sind, werden die Kraftstoffleitungen mehrfach in unterschiedliche Richtungen gebogen. Hierbei sind teilweise enge Krümmungsradien der Kraftstoffleitung erforderlich. Aufgrund der Krümmung kommt es im Leitungsinneren im Innenradius des gebogenen Bereichs zu Stauchungen und im Außenradius des gebogenen Bereichs zu Überdehnungen. Insbesondere die Stauchungen haben sich als problematisch erwiesen. Die Stauchungen führen zu Wellungen im Innenradius der gebogenen Leitung. Aufgrund dieser Wellungen wird insbesondere die leitfähige innerste Schicht stark beansprucht.

Gegenüber früher eingesetzten Leitungen konnte zwischenzeitlich zwar die Problematik des Ablösens der elektrisch leitfähigen Schicht von der Stützschicht reduziert werden, aufgrund der engen Krümmungsradien kommt es jedoch zu Schäden der elektrisch leitfähigen Schicht.

Die Wellungen verfügen wiederum über konvexe und konkave Abschnitte, wobei insbesondere im konvex gebogenen Bereich enge Krümmungsradien entstehen, die zu großen Spannungen führen, die während der Fertigung oder später unter Testbedingungen zu Quer- und Längsrisse in der elektrisch leitfähigen Schicht geführt haben.

Insbesondere bei pulsierenden Druckbeanspruchungen, wie sie beim Fördern von Kraftstoffen auftreten, können diese Risse sich nachteilig auf die Festigkeit der Leitung auswirken. Über die Rissen dringt der geförderte Kraftstoff in die Leitung ein und entfaltet zusätzlich eine Kerbwirkung, die zu einem weiteren Einreißen im Bereich der Risse führen kann. Zudem können die Risse sich vollständig durch die elektrisch leitende Schicht hindurch erstrecken, so dass die elektrisch leitende Schicht abschnittsweise unterbrochen ist. Dies kann sich nachteilig auf die elektrische Leitfähigkeit auswirken. Da die elektrisch leitfähige Schicht statische Elektrizität in Längsrichtung der Leitung ableiten soll, kann diese Rissbildung in Querrichtung dazu führen, dass die Leitfähigkeit teilweise herabgesetzt wird. Außerdem werden die Permeationseigenschaften der Leitung verschlechtert.

Aufgabe der erfindungsgemäßen Lösung ist es daher, eine mehrschichtige Leitung der eingangs genannten Art derart zu verbessern, dass ihre Produktionssicherheit und Lebensdauer erhöht wird, und die elektrische Leitfähigkeit auch unter ungünstigen Bedingungen sichergestellt werden kann.

Die Aufgabe wird erfindungsgemäß gelöst durch eine mehrschichtige Leitung der eingangs genannten Art, bei der der leitfähige Abschnitt im Wesentlichen streifenförmig ist und sich in Längsrichtung der Leitung erstreckt.

Diese Lösung hat den Vorteil, dass der streifenförmige Abschnitt so verlegt werden kann, dass die Krümmung der Leitung lediglich eine Dehnung des Streifens bewirkt, sofern nur ein Streifen vorgesehen ist. Zudem ermöglicht die streifenförmige Gestaltung des leitfähigen Abschnitts den leitfähigen Abschnitt mit besonders hoher Leitfähigkeit zu versehen, ohne dass dadurch die Festigkeit der Leitung nennenswert herabgesetzt wird. Die Belastungen aufgrund der Krümmung der Leitung und der partielle Überdehnung der inneren Schicht können nunmehr verstärkt auf die dem leitfähigen Abschnitt benachbarten Schichten der Leitung übertragen werden. Es hat sich gezeigt, dass bei der erfindungsgemäßen Gestaltung der Leitung die Rissbildung der inneren Oberfläche der Leitung vollständig eliminiert werden konnte. Dies führte zu einer verbesserten Dauerfestigkeit der Leitung, ohne dabei die Leitfähigkeit einzuschränken.

In einer vorteilhaften Weiterbildung der Erfindung kann der leitfähige Abschnitt über eine Trägerschicht mit der Stützschicht verbunden sein. Durch eine solche Trägerschicht lässt sich die Festigkeit der Verbindung zwischen Stützschicht und leitfähigem Abschnitt nochmals erhöhen. Zudem können die Belastungen, die durch das Krümmen der Leitung auftreten, von dem leitfähigen Abschnitt heraus in die Trägerschicht verlegt werden.

Als Vorteil kann es sich zudem erweisen, wenn der streifenförmige Abschnitt ein Grundmaterial und ein elektrisch leitendes Material aufweist. Auch dadurch lassen sich die Materialeigenschaften des streifenförmigen Abschnitts verbessern. Je nach Wahl des Grundmaterials können die Haftungseigenschaften zwischen Trägerschicht und/oder Stützschicht verbessert werden.

Um die Verbindung zwischen dem streifenförmigen Abschnitt und der Trägerschicht zu verbessern, kann das Grundmaterial auch in der Trägerschicht enthalten sein. Wenn sowohl Trägerschicht, als auch der leitende Abschnitt über das gleiche Grundmaterial verfügen, lässt sich eine innige und feste Verbindung zwischen dem leitenden Abschnitt und der Trägeschicht herbeiführen.

In einer vorteilhaften Weiterbildung der Erfindung kann der streifenförmige Abschnitt parallel zur Längserstreckung der Leitung verlaufen. Dadurch lassen sich die streifenförmigen Abschnitte möglichst kurz gestalten.

Weiterhin kann es sich als günstig erweisen, wenn der streifenförmige Abschnitt in die Trägerschicht hineinragt. Durch ein solches Hineinragen lässt sich eine besonders intensive Verbindung zwischen Trägerschicht und leitendem Abschnitt herbeiführen. Der streifenförmige Abschnitt bildet dabei nicht die gesamte Schichtstärke.

Dabei kann es sich als vorteilhaft erweisen, wenn das Lumen der Leitung abschnittsweise von der Trägerschicht und dem elektrisch leitenden Abschnitt begrenzt wird. Dadurch lassen sich die Belastungen, die durch das Biegen der Leitung entstehen, in die Trägerschicht hineinverlagern.

Von Vorteil kann es dabei sein, wenn in Umfangsrichtung der Leitung die radiale Ausdehnung des streifenförmigen Abschnitts in der Mitte größer als an den seitlichen Rändern ist. Auf diese Weise lässt sich ein guter Kompromiss zwischen Leitfähigkeit und Festigkeit des leitfähigen Abschnitts erreichen.

Auch kann es sich als günstig erweisen, wenn die radiale Ausdehnung des streifenförmigen Abschnitts höchstens die Hälfte, vorzugsweise höchstens ein Achtel der radialen Schichtstärke der Trägerschicht beträgt. Hierdurch lässt sich eine hohe Festigkeit der Trägerschicht bei gleichzeitig guten Leiteigenschaften des leitenden Abschnitts erzielen.

Zudem kann es sich als günstig erweisen, wenn die Breite des leitfähigen Abschnitts in Umfangsrichtung höchstens ein Zehntel, vorzugsweise ein Viertel des Innenumfangs der Leitung beträgt. Es hat sich gezeigt, dass sich dadurch gute Leiteigenschaften des leitfähigen Abschnitts bei gleichzeitig genügender Festigkeit der Leitung erzielen lassen.

Von Vorteil kann es dabei sein, wenn die Breite des streifenförmigen Abschnitts höchstens 3 mm, vorzugsweise höchstens 1 mm beträgt.

Auch kann es sich als vorteilhaft erweisen, wenn die Schichtstärke der Trägerschicht höchstens 1 mm, vorzugsweise höchstens 0,25 mm beträgt. Diese Schichtstärke ermöglicht eine ausreichende Festigkeit der Trägerschicht bei gleichzeitig guten Leiteigenschaften des leitfähigen Abschnitts.

Weiterhin kann es von Vorteil sein, wenn das Grundmaterial ein flexibler Kunststoff ist. Bei einem solchen flexiblen Kunststoff lassen sich die erfindungsgemäßen Leitungen großtechnisch einfacher herstellen. Hier kommen alle Kunststoffe in Frage, die Kraftstoff beständig und extrudierbar sind und eine permeationshemmende Eigenschaft haben.

Von Vorteil kann es dabei sein, wenn das Grundmaterial des leitenden Abschnitts THV enthält. Dieses Material verfügt über Flexibilität bei gleichzeitig genügend großer Festigkeit. Zudem eignet es sich für das Einbringen von leitenden Materialien.

Auch kann es sich als günstig erweisen, wenn die Trägerschicht einer flexiblen Kunststoff enthält. Auch dadurch lassen sich die erfindungsgemäßen Leitungen großtechnisch einfacher herstellen. Von Vorteil kann es dabei sein, wenn der flexible Kunststoff der Trägerschicht ebenfalls THV enthält. Da sowohl der leitende Abschnitt, als auch die Trägerschicht THV enthalten kann, lässt sich eine innige Verbindung zwischen der Trägerschicht und dem leitenden Abschnitt herbeiführen. Hier kommen alle Kunststoffe in Frage, die Kraftstoff beständig und extrudierbar sind und eine permeationshemmende Eigenschaft haben.

Um die benötigten elektrischen Eigenschaften bei geringen Kosten zu erzielen, kann das elektrisch leitende Material Kohlenstoff enthalten. Durch die streifenförmige Form der leitenden Abschnitte können neben Elementarkohlenstoff (Ruß) auch Kupfer, Silber, Nickel und andere verhältnismäßig teuere leitende Materialien verwendet werden.

Von Vorteil kann es dabei sein, wenn der Anteil von elektrisch leitendem Material im elektrisch leitenden Abschnitt weniger als 12 % beträgt. Dadurch verfügt der leitende Abschnitt über eine genügend große Festigkeit.

Weiterhin kann es sich als günstig erweisen, wenn die Stützschicht einen Elastomer aufweist. Auch dadurch lässt sich die Großserienfertigung der Leitung vereinfachen. Als Schützschicht können sämtliche kraftstoffbeständige Elastomere und Kunststoffe eingesetzt werden.

Um die Flexibilität und Festigkeit der Leitung, sowie die gewünschten Eigenschaften zu erzielen, kann es sich als vorteilhaft erweisen, wenn die Schichtstärke der Stützschicht ein mehrfaches der Schichtstärke der Trägerschicht entspricht.

Weiterhin kann es sich als günstig erweisen, wenn in Umfangsrichtung der Leitung mehrere voneinander beabstandete leitende Abschnitte vorgesehen sind. Dadurch kann die Produktions- und Betriebssicherheit der erfindungsgemäßen Leitung erhöht werden.

Von Vorteil kann es dabei sein, wenn vier gleichmäßig voneinander beabstandete streifenförmige leitende Abschnitte vorgesehen sind. Hierbei ergibt sich ein guter Kompromiss zwischen Festigkeitseigenschaften einerseits und der erforderlichen Leitfähigkeit andererseits.

In einer vorteilhaften Weiterbildung der Erfindung ist die Leitung ein flexibler Schlauch. Bei einem solchen Schlauch können die Vorteile der Erfindung besonders gut umgesetzt werden. Die Erfindung kann sich jedoch auch für vergleichsweise starre Rohre eignen.

Nachfolgend wird die Wirkungs- und Funktionsweise der Erfindung anhand eines Ausführungsbeispiels näher erläutert. Es zeigen:
Fig. 1 die erfindungsgemäße Leitung in einer Querschnittsansicht;
Fig. 2 das Detail aus Fig. 1.

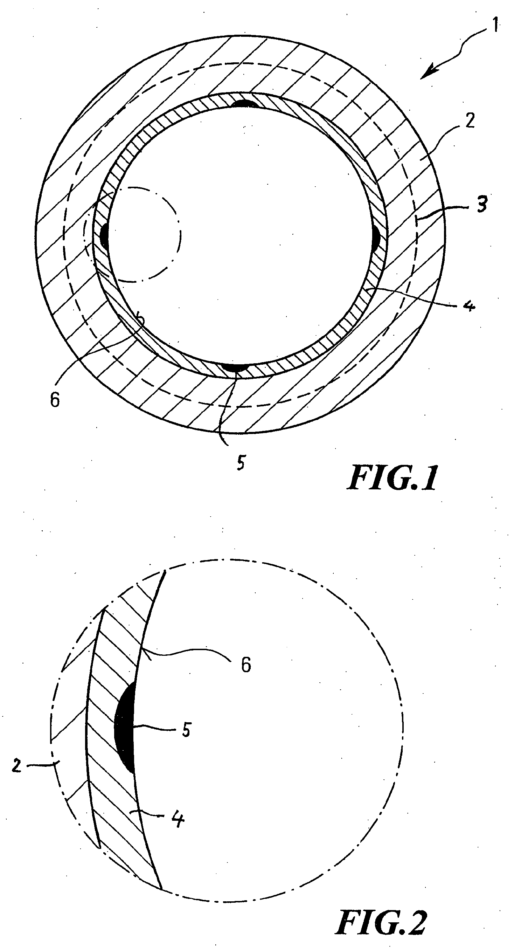

Fig. 1 zeigt die erfindungsgemäße mehrschichtige, Leitung 1 in einer Querschnittsansicht. Bei der Leitung handelt es sich um einen flexiblen Schlauch. Die Leitung 1 verfügt über eine Stützschicht 2 aus einem elastomeren Werkstoff mit einer Textileinlage 3. An die Stützschicht 2 schließt nach innen eine Trägerschicht 4 an, die mit der Stützschicht 2 fest verbunden ist. Die Trägerschicht 4 besteht aus THV, einem extrudierbaren Kunststoff. Weiterhin weist die Leitung 4 elektrisch leitfähige Abschnitte 5 auf, die sich streifenförmig in Längsrichtung der Leitung, bzw. des Schlauches erstrecken. Die streifenförmigen leitfähigen Abschnitte bestehen aus einem Grundmaterial, in das ein leitfähiges Material eingebracht worden ist. Bei dem Grundmaterial handelt es sich in der bevorzugten Ausführungsform um THV, einem extrudierbaren Kunststoff. THV ist gleichzeitig auch das Material, aus dem die Trägerschicht 4 hergestellt wurde. Bei dem leitfähigen Material handelt es sich um Kohlenstoff, der im pulverisierter Form in den leitfähigen Abschnitt eingebracht worden ist. Dadurch ergibt sich eine dunkle Färbung des leitfähigen Abschnittes, wohingegen das Grundmaterial THV im Wesentlichen transparent ist. Die Mischung aus leitfähigem Material und Grundmaterial ist ebenfalls extrudierbar.

In der Darstellung in Fig. 2 sieht man, wie der leitende Abschnitt in die Trägerschicht eingebracht ist. Die Trägerschicht und die leitenden Abschnitte begrenzen zusammen das Lumen der Leitung, bzw. des Schlauches, wobei der Leitungsquerschnitt im Wesentlichen kreisförmig ist, wodurch sich eine im Wesentlichen zylindrische Innenfläche 6 ergibt. Im Querschnitt gesehen erstreckt sich hierzu der leitfähige Abschnitt in die Trägerschicht hinein, wobei der leitfähige Abschnitt im Bereich der Innenfläche 6 durch den kreisbogenförmigen Verlauf der Innenfläche begrenzt und auf der von der Innenfläche abgewandten Seite ebenso kreisbogenförmig begrenzt wird, jedoch mit einem kleineren Krümmungsradius. Dadurch ergibt sich eine mondsichelförmige Gestaltung des Querschnitts der leitfähigen Abschnitte.

Die Schichtstärken in radialer Richtung sind in den Darstellungen in Fig. 1 und 2 nicht maßstabsgetreu. In einem bevorzugten Ausführungsbeispiel beträgt die Schichtstärke der Stützschicht 2 ca. 1 - 4 mm. Die Schichtstärke in radialer Richtung der Trägerschicht beträgt ca. 0,25 mm. Die Schichtstärke der Stützschicht beträgt somit ca. bis zu das 16-fache der Schichtstärke der Trägerschicht. Die radiale Ausdehnung der leitfähigen Abschnitte beträgt ca. 0,05 mm und liegt damit im bevorzugten Bereich, der ein Verhältnis von radialer Ausdehnung des leitfähigen Abschnittes zu Schichtstärke der Trägerschicht von ca. höchsten die Hälfte, vorzugsweise höchstens ein Achtel vorsieht. In Umfangsrichtung beträgt die maximale Ausdehnung der leitfähigen Abschnitte höchstens ein Viertel des Innenumfangs des Schlauchs. In der bevorzugten Ausführungsform sind vier streifenförmige leitfähige Abschnitte vorgesehen. Die Erfindung lässt sich jedoch auch mit nur einem leitfähigen streifenförmigen Abschnitt oder auch mit einer Anzahl von leitfähigen streifenförmigen Abschnitten ausführen, die größer als vier ist. In jenem Fall sollte die Innenfläche der Leitung, bzw. des Schlauchs überwiegend durch die Trägerschicht gebildet werden.

Die Anzahl und die Abmessungen der leitfähigen streifenförmigen Abschnitte kann sich nach der erforderlichen Leitfähigkeit oder aber Festigkeit der Leitung, bzw. des Schlauchs richten.

Als leitfähig wird im Sinne der Erfindung eine Leitung, bzw. ein Schlauch angesehen, wenn er die Anforderungen erfüllt, wie sie durch die Automobilindustrie gefordert werden (z.B. DIN IEC 93 ― Klassifikation VDE 0303 Teil 30; DIN EN ISO 8031), um statische Elektrizität aus den Leitungen abzuführen. Hierzu wird eine bestimmte Mindestleitfähigkeit, bzw. ein bestimmter Widerstand vorgeschrieben. Die Leitfähigkeit der leitfähigen Schicht ist gegenüber der Trägerschicht um ein Vielfaches höher, um eine eindeutige Zuordnung zwischen Trägerschicht und dem leitfähigen Abschnitt zu ermöglichen. Die Leitfähigkeitswerte der vorliegenden Erfindung liegen im Bereich zwischen etwa 10⁴ ― 10⁶ Ohm/cm².

Weiterhin ist auch möglich, dass die Leitung, bzw. der Schlauch über zusätzliche Schichten verfügt, wie z.B. eine Diffusionsbarrierenschicht aus einem Fluorpolymer oder dergleichen.

Während des Herstellens der Leitung kann ein Umformen der Leitung erfolgen, damit die Leitung die erforderliche Kontur einnimmt, die z.B. für ein Verlegen in einem Motorraum eines Fahrzeugs erforderlich ist. Das Umformen kann dabei nicht nur in einer Ebene, sondern in drei Dimensionen erfolgen.

Nachfolgend wird die Wirkungs- und Funktionsweise der Erfindung näher erläutert:

Durch die erfindungsgemäße Leitung, bzw. den Schlauch lassen sich vergleichsweise stabile leitfähige Abschnitte realisieren, die eine ausreichende Festigkeit haben und die auch stärkeren Krümmungen der Leitung folgen können. Auch im Bereich von Stauchungen an der Innenseite des Schlauchs und den dadurch entstehenden Wellungen kann eine Rißbildung in der leitfähigen Streifen verhindert werden. Selbst wenn einer der Streifen unterbrochen werden sollte, kann die Übertragung von Elektrizität noch durch die verbleibenden Streifen erfolgen. Da sowohl die leitfähigen Abschnitte, wie auch das Trägermaterial das gleiche Grundmaterial aufweisen, entsteht eine innige Verbindung zwischen dem leitfähigen Abschnitt und der Trägerschicht. Ein Aufbrechen von Trägerschicht und leitfähigem Abschnitt kann zuverlässig verhindert werden. Da der Großteil der Belastung durch die Trägerschicht erfolgt, die keine Schwächung durch das leitfähige Material erfährt, ist die Festigkeit an der Innenseite der Leitung zusätzlich erhöht.

Je nach Einsatzgebiet kann die Leitung in der Art eines rohres auch relativ steif ausgebildet sein.

## Patentansprüche

1. Mehrschichtige Leitung, vorzugsweise Kraftstoffleitung für Kraftfahrzeuge, mit zumindest einer Stützschicht (2) und mit wenigstens einem elektrisch leitfähigen Abschnitt (5), der zumindest mittelbar mit der Stützschicht verbunden ist, **dadurch gekennzeichnet, dass** der leitfähige Abschnitt im Wesentlichen streifenförmig ist und sich in Längsrichtung der Leitung erstreckt.

2. Mehrschichtige Leitung nach Anspruch 1, **dadurch gekennzeichnet, dass** der leitfähige Abschnitt über eine Trägerschicht (4) mit der Stützschicht verbunden ist.

3. Mehrschichtige Leitung nach Anspruch 1 oder 2, **dadurch gekennzeichnet, dass** der streifenförmige Abschnitt ein Grundmaterial und ein elektrisch leitendes Material aufweist.

4. Mehrschichtige Leitung nach einem der vorangegangenen Ansprüche, **dadurch gekennzeichnet, dass** Grundmaterial auch in der Trägerschicht enthalten ist.

5. Mehrschichtige Leitung nach einem der vorangegangenen Ansprüche, **dadurch gekennzeichnet, dass** der streifenförmige Abschnitt parallel zur Längserstreckung der Leitung verläuft.

6. Mehrschichtige Leitung nach einem der vorangegangenen Ansprüche, **dadurch gekennzeichnet, dass** der streifenförmige Abschnitt in die Trägerschicht in radialer Richtung hineinragt.

7. Mehrschichtige Leitung nach einem der vorangegangenen Ansprüche, **dadurch gekennzeichnet, dass** das Innere der Leitung abschnittsweise von der Trägerschicht und dem elektrisch leitfähigen Abschnitt begrenzt wird.

8. Mehrschichtige Leitung nach einem der vorangegangenen Ansprüche, **dadurch gekennzeichnet, dass** in Umfangsrichtung der Leitung die radiale Ausdehnung des streifenförmigen Abschnitts in der Mitte größer als an den seitlichen Rändern ist.

9. Mehrschichtige Leitung nach einem der vorangegangenen Ansprüche, **dadurch gekennzeichnet, dass** die radiale Ausdehnung des streifenförmigen Abschnitts höchstens die Hälfte, vorzugsweise ein Achtel der radialen Schichtstärke der Trägerschicht beträgt.

10. Mehrschichtige Leitung nach einem der vorangegangenen Ansprüche, **dadurch gekennzeichnet, dass** die Breite des leitfähigen Abschnitts in Umfangsrichtung höchstens ein Viertel des Innenumfangs der Leitung beträgt.

11. Mehrschichtige Leitung nach einem der vorangegangenen Ansprüche, **dadurch gekennzeichnet, dass** die Breite des leitfähigen Abschnitts höchstens 3 mm, vorzugsweise 1 mm beträgt.

12. Mehrschichtige Leitung nach einem der vorangegangenen Ansprüche, **dadurch gekennzeichnet, dass** die Schichtstärke der Trägerschicht höchstens 1 mm, vorzugsweise 0,25 mm beträgt.

13. Mehrschichtige Leitung nach einem der vorangegangenen Ansprüche, **dadurch gekennzeichnet, dass** das Grundmaterial ein flexibler Kunststoff ist.

14. Mehrschichtige Leitung nach einem der vorangegangenen Ansprüche, **dadurch gekennzeichnet, dass** das Grundmaterial des leitenden Abschnitts THV enthält.

15. Mehrschichtige Leitung nach einem der vorangegangenen Ansprüche, **dadurch gekennzeichnet, dass** die Trägerschicht einen flexiblen Kunststoff enthält.

16. Mehrschichtige Leitung nach einem der vorangegangenen Ansprüche, **dadurch gekennzeichnet, dass** der flexible Kunststoff der Trägerschicht THV enthält.

17. Mehrschichtige Leitung nach einem der vorangegangenen Ansprüche, **dadurch gekennzeichnet, dass** das elektrisch leitende Material Kohlenstoff enthält.

18. Mehrschichtige Leitung nach einem der vorangegangenen Ansprüche, **dadurch gekennzeichnet, dass** der Anteil von elektrisch leitendem Material im elektrisch leitenden Abschnitt höchstens 12 % beträgt.

19. Mehrschichtige Leitung nach einem der vorangegangenen Ansprüche, **dadurch gekennzeichnet, dass** die Stützschicht einen Elastomer aufweist.

20. Mehrschichtige Leitung nach einem der vorangegangenen Ansprüche, **dadurch gekennzeichnet, dass** die Schichtstärke der Stützschicht ein mehrfaches der Schichtstärke der Trägerschicht entspricht.

21. Mehrschichtige Leitung nach einem der vorangegangenen Ansprüche, **dadurch gekennzeichnet, dass** in Umfangsrichtung der Leitung mehrere voneinander beabstandete Abschnitte vorgesehen sind.

22. Mehrschichtige Leitung nach einem der vorangegangenen Ansprüche, **dadurch gekennzeichnet, dass** vier gleichmäßig voneinander beabstandete streifenförmige Abschnitte vorgesehen sind.

23. Mehrschichtige Leitung nach einem der vorangegangenen Ansprüche, **dadurch gekennzeichnet, dass** die Leitung ein flexibler Schlauch ist.

24. Mehrschichtige Leitung nach einem der vorangegangenen Ansprüche, **dadurch gekennzeichnet, dass** die Leitung ein Rohr ist.
